# EUROPÄISCHE PATENTSCHRIFT

(11) **EP 3 642 061 B1**
(45) Veröffentlichungstag und Bekanntmachung des Hinweises auf die Patenterteilung: **25.08.2021**
(21) Anmeldenummer: 18727254.7
(22) Anmeldetag: 23.05.2018
(51) Int. Cl.: B60G 21/055, B60G 7/00

(54) **STABILISATOR FÜR EIN FAHRWERK EINES FAHRZEUGS UND VERFAHREN ZUM HERSTELLEN EINES SOLCHEN STABILISATORS**
STABILIZER BAR FOR A CHASSIS OF A MOTOR VEHICLE, AND METHOD FOR PRODUCING SUCH A STABILIZER BAR
STABILISATEUR DE SUSPENSION DE VÉHICULE ET PROCÉDÉ DE FABRICATION DUDIT STABILISATEUR

(30) Priorität: 21.06.2017 DE 102017210416
(43) Veröffentlichungstag der Anmeldung: 29.04.2020
(73) Patentinhaber: ZF Friedrichshafen AG, 88046 Friedrichshafen (DE)
(72) Erfinder: SCHLOTTER, Sebastian, 97464 Niederwerrn (DE); KNAUB, Witalij, 49504 Lotte (DE); NACHBAR, Frank, 49088 Osnabrück (DE)
(74) Vertreter: ZF Friedrichshafen AG
(86) Internationale Anmeldenummer: PCT/EP2018/063537
(87) Internationale Veröffentlichungsnummer: WO 2018/233968

(56) Entgegenhaltungen:
- WO-A1-2011/006492
- DE-A1-102006 038 451
- DE-A1-102010 041 791
- DE-A1-102014 218 433
- JP-A- H08 295 116
- US-A1- 2014 027 995

## Beschreibung

Die Erfindung betrifft einen Stabilisator für ein Fahrwerk eines Fahrzeugs mit einem gebogenen, eine Torsionsfeder ausbildenden Stabilisatorkörper, mit einer Pendelstütze und mit einem Anbindungsteil, wobei das Anbindungsteil den Stabilisatorkörper und die Pendelstütze miteinander verbindet. Des Weiteren betrifft die Erfindung ein Verfahren zum Herstellen eines erfindungsgemäßen Stabilisators.

Ein derartiger Stabilisator ist aus der DE 10 2016 205 916 A bekannt. Hiernach weist der Stabilisator einen gebogenen, eine Torsionsfeder ausbildenden Grundkörper aus faserverstärktem Kunststoff sowie wenigstens ein endseitig daran angeordnetes Anbindungsteil zur Anbindung des Grundkörpers an eine Pendelstütze auf, wobei das Anbindungsteil mittels einer Schnappverbindung mit dem Grundkörper verbunden ist.

Aus der JP H08 295116 A ist ebenfalls ein gattungsbildender Stabilisator der eingangs genannten Art bekannt.

Der DE 10 2014 218 433 A1 ist eine Pendelstütze zu entnehmen, wobei an einem Ende eines Rohres ein Gelenkgehäuse zum Aufnehmen eines Kugelzapfens angespritzt ist.

Stabilisatoren der vorstehend genannten Art werden auch als Drehstabfedern bezeichnet. Stabilisatoren oder Drehstabfedern sind in der Kraftfahrzeugtechnik, insbesondere dem Fahrwerkbau, für den Einsatz als Wankstabilisatoren allgemein bekannt. Es handelt sich dabei um auf Torsion beanspruchbare Bauteile, welche die Wankbewegungen eines Fahrzeugs vermindern. Zur Wankstabilisierung des Aufbaus von Kraftahrzeugen können Stabilisatoren zwischen den Rädern an einer Achse eines Kraftfahrzeuges angeordnet werden. Bei wechselseitiger Einfederung der Räder einer Achse verteilen Stabilisatoren die Achslast und sorgen damit für eine gleichmäßige Achslastverteilung. Hierdurch kann das Fahrverhalten eines Kraftfahrzeugs derart positiv beeinflusst werden, dass beispielsweise die Haftbeiwerte der an einer Achse angeordneten Räder immer nahezu identisch auf einem guten Niveau gehalten werden können.

Die freien Enden bekannter Stabilisatoren können üblicherweise jeweils über Pendelstützen an einem separaten Bauteil, beispielsweise einem radführenden Element wie einem Radträger oder einem radführenden Lenker, angeordnet und/oder abgestützt werden. Hierbei sind die Pendelstützen üblicherweise als separate Bauteile ausgebildet. Hierbei müssen die Pendelstützen mit dem jeweiligen Ende des Stabilisatorkörpers des Stabilisators verbunden werden. Diese Montage gestaltet sich oftmals aufwändig oder zeitintensiv.

Es ist die der Erfindung zu Grunde liegende Aufgabe, einen Stabilisator und ein Verfahren der eingangs genannten Art derart weiterzuentwickeln, dass der Montageaufwand reduziert ist. Vorzugsweise soll der Anteil der zu montierenden Einzelteile bei der Montage des Stabilisators in einem Fahrwerk eines Fahrzeugs reduziert werden. Vorzugsweise soll eine alternative Ausführungsform bereitgestellt werden.

Die der Erfindung zu Grunde liegende Aufgabe wird mit einem Stabilisator nach Anspruch 1 und mittels eines Verfahrens nach Anspruch 11 gelöst. Bevorzugte Weiterbildungen der Erfindung finden sich in den Unteransprüchen und in der nachfolgenden Beschreibung.

Der Stabilisator ist zum Einsatz in einem Fahrwerk eines Fahrzeuges oder Kraftfahrzeuges ausgebildet. Hierbei weist der Stabilisator einen gebogenen, eine Torsionsfeder ausbildenden Stabilisatorkörper auf. Insbesondere ist im Rahmen der vorliegenden Anmeldung unter einem Stabilisatorkörper ein länglicher, ein strangartiger, ein stabartiger und/oder rohrartiger Körper zu verstehen. Somit kann der Stabilisatorkörper hohl- bzw. rohrförmig ausgeführt oder aus Vollmaterial gefertigt sein. Insbesondere ist der Stabilisatorkörper als ein Rohrstab oder Vollstab ausgebildet. Aufgrund der gebogenen Gestaltung des Stabilisatorkörpers kann dieser im Wesentlichen U-förmig, C-förmig oder anderweitig gebogen ausgebildet sein. Der Stabilisatorkörper kann mehrteilig ausgebildet sein. Insbesondere ist der Stabilisator als ein aktiver Wankstabilisator ausgebildet, wobei der Stabilisatorkörper einen Aktuator aufweisen kann. Der Stabilisatorkörper kann mindestens teilweise oder vollständig aus einem Metall und/oder einem Faserkunststoffverbund hergestellt sein.

Des Weiteren weist der Stabilisator mindestens eine Pendelstütze und mindestens ein Anbindungsteil auf. Hierbei verbindet das Anbindungsteil den Stabilisatorkörper und die Pendelstütze miteinander. Das Anbindungsteil kann somit als ein Zwischenstück zwischen der Pendelstütze einerseits und dem Stabilisatorkörper andererseits ausgebildet sein. Ein erstes Ende des Anbindungsteils ist an ein Pendelstützenende angespritzt.

Hierbei ist von Vorteil, dass aufgrund des Anspritzens des ersten Endes des Anbindungsteils an das Pendelstützenende der zugehörigen Pendelstütze die Verbindung zwischen der Pendelstütze und dem Anbindungsteil vorfertigbar ist. Aufgrund des Anspritzens des Anbindungsteils an das Pendelstützenende ergeben sich neue Möglichkeiten für die Herstellung einer Verbindung zwischen dem Stabilisatorkörper und der Pendelstütze. Insbesondere ergeben sich Möglichkeiten zur Vereinfachung der Fertigung als auch der Montage des Stabilisators. Hierbei kann die Montage an den Stabilisatorkörper und/oder eine Endmontage des Stabilisators in einem Fahrzeug erleichtert werden.

Nach einer weiteren Ausführungsform ist zwischen dem ersten Ende des Anbindungsteils und dem Pendelstützenende eine Gelenkverbindung realisiert. Somit ist das erste Ende des Anbindungsteils gelenkig mit dem Pendelstützenende verbunden. Insbesondere ist die Gelenkverbindung aufgrund eines Zusammenwirkens des ersten Endes des Anbindungsteils und des Pendelstützenendes realisiert. Insbesondere ist die Gelenkverbindung als eine Kugelgelenkverbindung und/oder eine Drehgelenkachsverbindung realisiert. Bei einer Realisierung als eine Kugelgelenkverbindung kann das Anbindungsteil einen Gelenkgehäuseabschnitt aufweisen. Insbesondere weist der Gelenkgehäuseabschnitt eine Gehäuseausnehmung auf. Der Gelenkgehäuseabschnitt und/oder die Gehäuseausnehmung kann im Wesentlichen topfartig ausgebildet sein. In dem Gelenkgehäuse und/oder der Gehäuseausnehmung kann das Pendelstützenende gelenkig, insbesondere schwenkbeweglich in Bezug zum Gelenkgehäuseabschnitt, gelagert sein.

Vorzugsweise weist das Pendelstützenende eine Gelenkkugel auf. Diese Gelenkkugel kann mindestens teilweise vom ersten Ende des Anbindungsteils umgeben sein. Hierbei kann die Gelenkkugel mittels des ersten Endes des Anbindungsteils umspritzt sein. Insbesondere ist die Gelenkkugel gelenkig und/oder schwenkbeweglich in dem ersten Ende des Anbindungsteils gelagert. Ausgehend von der Gelenkkugel kann sich ein Zapfenabschnitt aus dem ersten Ende des Anbindungsteils, insbesondere aus dem Gehäuseabschnitt und/oder aus der Gehäuseausnehmung, heraus erstrecken.

Bei einer alternativen Ausführung mit einer Gelenkverbindung in der Gestalt einer Drehgelenkachsverbindung kann an Stelle eines Kugelgelenks ein Drehgelenk mit einer Drehgelenkachse eingesetzt werden. Insbesondere ist die Drehgelenkachse achsparallel zu einer Verdrehachse des Stabilisators, insbesondere des Stabilisatorkörpers, ausgerichtet. Zum Ausgleichen von Fertigungstoleranzen kann die Drehgelenkachse in einem Gummilager, insbesondere einem Elastomer, gelagert sein.

Gemäß einer Weiterbildung ist zwischen einem zweiten Ende des Anbindungsteils und einem Stabilisatorkörperende des Stabilisatorkörpers eine ungelenkige oder starre Verbindung realisiert. Insbesondere ist das zweite Ende des Anbindungsteils von dem ersten Ende des Anbindungsteils abgewandt. Eine ungelenkige oder starre Verbindung lässt sich im Vergleich mit einer gelenkigen Verbindung einfach herstellen. Aufgrund der ungelenkigen oder starren Verbindung des zweiten Endes des Anbindungsteils mit dem Stabilisatorkörperende wird eine Relativbewegung des Anbindungsteils zum Stabilisatorkörperende verhindert.

Erfindungsgemäß ist das zweite Ende des Anbindungsteils an das Ende des Stabilisatorkörperendes angespritzt. Somit kann das Anbindungsteil in einem einzigen Arbeitsschritt gleichzeitig mit dem Pendelstützenende und dem Stabilisatorkörperende verbunden werden. Zum Anspritzen des Anbindungsteils an dem Pendelstützenende und/oder dem Stabilisatorkörperende können die Pendelstütze und/oder das Stabilisatorkörperende in ein Spritzgusswerkzeug eingelegt werden. Somit kann der Stabilisator als ein Bauteilverbund bestehend aus dem Stabilisatorkörper, dem Anbindungsteil und der Pendelstütze realisiert sein. Ein derartiger Bauteilverbund reduziert den Anteil der zu montierenden Einzelteile in einem Fahrwerk eines Fahrzeugs, indem der Bauteilverbund vollständig vorgefertigt ist. Hierdurch kann die Integration des Stabilisators in das Fahrwerk eines Fahrzeugs vereinfacht werden. Insbesondere kann eine Einbauzeit und/oder Taktzeit reduziert werden.

Alternativ oder zusätzlich kann das zweite Ende des Anbindungsteils mittels einer stoffschlüssigen Verbindung und/oder einer formschlüssigen Verbindung mit dem Stabilisatorkörperende verbunden sein. Die stoffschlüssige Verbindung kann beispielsweise als eine Klebeverbindung ausgebildet sein. Insbesondere ist eine formschlüssige Verbindung in der Gestalt einer Schnappverbindung realisiert. Mittels einer Schnappverbindung kann auf einfache Weise, insbesondere werkzeuglos, ein Formschluss zwischen dem zweiten Ende des Anbindungsteils und dem Stabilisatorkörperende hergestellt werden. Bei einer derartigen stoffschlüssigen und/oder formschlüssigen Verbindung kann auf ein Anspritzen des Anbindungsteils an das Stabilisatorkörperende verzichtet werden. Bei dieser Ausführungsform wird somit lediglich das erste Ende des Anbindungsteils an das Pendelstützenende angespritzt. Nach der erfolgten Herstellung des Anbindungsteils kann die Pendelstütze mittels des Anbindungsteils und einer geeigneten stoffschlüssigen und/oder formschlüssigen Verbindung mit dem Stabilisatorkörperende verbunden werden. Bei einer rein formschlüssigen Verbindung des zweiten Endes des Anbindungsteils mit dem Stabilisatorkörperende kann diese formschlüssige Verbindung ein zerstörungsfreies Trennen der Verbindung, beispielsweise aufgrund der Gestaltung als Schnappverbindung, ermöglichen.

Vorzugsweise ist der Stabilisator als ein nicht-zerstörungsfrei trennbarer Bauteilverbund ausgebildet. Insbesondere bei einem Anspritzen des Anbindungsteils sowohl an das Pendelstützenende als auch das Stabilisatorkörperende ergibt sich ein zusammenhängender, nicht-zerstörungsfrei trennbarer Bauteilverbund. Insbesondere weist der Bauteilverbund mindestens das Anbindungsteil und die Pendelstütze auf. Vorzugsweise weist der Bauteilverbund das Anbindungsteil, die Pendelstütze und den Stabilisatorkörper auf.

Nach einer weiteren Ausführungsform weist der Stabilisatorkörper zwei voneinander abgewandte Stabilisatorkörperenden auf, die jeweils mittels eines Anbindungsteils mit einer Pendelstütze verbunden sind. Somit weist der Stabilisatorkörper des Stabilisators zweckmäßigerweise zwei sich gegenüberliegende und/oder voneinander abgewandte Stabilisatorkörperenden auf, an denen jeweils ein Anbindungsteil zur Anbindung des Stabilisatorkörpers an jeweils eine Pendelstütze angeordnet ist. Dabei kann der Stabilisatorkörper auf verschiedene Weise geformt sein, wobei üblicherweise, insbesondere zur Verwendung des Stabilisators als Wankstabilisator, eine im Wesentlichen U-förmige Formgebung des Stabilisatorkörpers bevorzugt wird. Die Anbindungsteile und/oder Pendelstützen sind in diesem Fall jeweils endseitig an jedem der beiden U-Schenkel angeordnet. Das Anbindungsteil kann als eine Schnittstelle zwischen dem Stabilisatorkörper und der Pendelstütze und somit zur Kraftübertragung zwischen dem Stabilisatorkörper und der Pendelstütze dienen.

Gemäß einer Weiterbildung weist ein Stabilisatorkörperende eine mit dem Anbindungsteil zusammenwirkende Verdrehsicherung auf. Mittels der Verdrehsicherung ist eine relative Bewegung des Anbindungsteils in Bezug zu dem Stabilisatorkörperende verhindert. Hierbei kann die Verdrehsicherung als eine Hinterschneidung und/oder Abflachung ausgebildet sein. Alternativ oder zusätzlich kann die Verdrehsicherung eine Ovalität aufweisen oder als eine solche ausgebildet sein. Vorzugsweise weist die Verdrehsicherung eine ovale Kontur und/oder einen ovalen Außenumfang auf. Unter einer Ovalität kann ein von der Kreisform abweichender, insbesondere unrunder, Außenumfang verstanden werden. Insbesondere greift das Anbindungsteil in die Verdrehsicherung des Stabilisatorkörperendes ein. Mittels der Verdrehsicherung kann eine dem Einsatzzweck entsprechende Orientierung des Anbindungsteils in Bezug zu dem Stabilisatorkörper gewährleistet werden. Somit kann, beispielsweise auch bei einer im Wesentlichen kreisrunden Querschnittsform des Stabilisatorkörpers, ein Verdrehen des am Stabilisatorkörperende angeordneten, insbesondere angespritzten, Anbindungsteils verhindert wird. Hierzu kann das Stabilisatorkörperende mindestens abschnittsweise eine Querschnittsform aufweisen, die von einem kreisrunden Querschnitt abweicht, vorzugsweise mittels einer an einem Umfangsbereich vorgesehenen Abflachung und/oder Hinterschneidung. Durch eine hiermit formkorrespondierende Gestaltung des Anbindungsteils, insbesondere des zweiten Endes des Anbindungsteils, wird im verbundenen Zustand ein Verdrehen des Anbindungsteils gegenüber dem Stabilisatorkörperende wirksam verhindert. Hierbei wirken das Anbindungsteil, das Stabilisatorkörperende und die Verdrehsicherung zusammen.

Nach einer weiteren Ausführungsform ist das Anbindungsteils an ein erstes Pendelstützenende der Pendelstütze angespritzt. An ein von dem ersten Pendelstützenende abgewandtes zweites Pendelstützenende ist ein Verbindungsbauteil angespritzt. Somit können sowohl das Anbindungsteil als auch das Verbindungsbauteil mittels eines Spritzgussverfahrens hergestellt werden. Insbesondere sind das Anbindungsteil und das Verbindungsbauteil gleichzeitig bzw. in einem gemeinsamen Arbeitsschritt herstellbar. Vorzugsweise wird zunächst das Verbindungsbauteil an das zweite Pendelstützenende angespritzt. Erst hieran nachfolgend, insbesondere in einem weiteren Schritt, wird das Anbindungsteil an das erste Pendelstützenende angespritzt. Gleichzeitig kann das Anbindungsteil an ein Stabilisatorkörperende angespritzt werden.

Insbesondere weist das Verbindungsbauteil eine weitere Gelenkverbindung auf. Somit können sowohl das Anbindungsteil als auch das Verbindungsbauteil eine Gelenkfunktionalität bereitstellen. Die weitere Gelenkverbindung kann als eine Kugelgelenkverbindung und/oder eine Drehgelenkachsverbindung realisiert sein. Hierzu kann das Verbindungsbauteil einen weiteren Gelenkgehäuseabschnitt aufweisen. Der weitere Gelenkgehäuseabschnitt kann eine weitere Gehäuseausnehmung aufweisen. Insbesondere ist der weitere Gelenkgehäuseabschnitt und/oder die weitere Gehäuseausnehmung zum Aufnehmen einer weiteren Gelenkkugel ausgebildet. Insbesondere ist die weitere Gelenkkugel gelenkig und/oder schwenkbeweglich in dem Verbindungsbauteil, vorzugsweise in dem weiteren Gelenkgehäuseabschnitt und/oder in der weiteren Gehäuseausnehmung, gelagert. Ausgehend von der weiteren Gelenkkugel kann sich ein weiterer Zapfenabschnitt aus dem weiteren Gelenkgehäuseabschnitt und/oder der weiteren Gehäuseausnehmung heraus erstrecken. Bei einer Ausführung als eine Drehgelenkachsverbindung kann an Stelle eines Kugelgelenks ein Drehgelenk mit einer Drehgelenkachse eingesetzt werden. Zum Ausgleichen von Fertigungstoleranzen kann die Drehgelenkachse in einem Gummilager, insbesondere einem Elastomer, gelagert sein.

Gemäß einer Weiterbildung ist das Anbindungsteil und/oder das Verbindungsbauteil aus Kunststoff oder einem Faserkunststoffverbund hergestellt. Hierdurch kann das Anbindungsteil und/oder das Verbindungsbauteil als ein leichtes Bauteil in einem Spritzgussverfahren hergestellt werden. Insbesondere ist der Stabilisatorkörper aus Kunststoff oder einem Faserkunststoffverbund hergestellt. Somit lässt sich im Vergleich mit Metall ein erheblicher Gewichtsvorteil realisieren. Ein Faserkunststoffverbund kann Glasfasern, Kohlefasern, Carbonfasern, Basaltfasern oder metallische Fasern aufweisen. Des Weiteren weist der Faserkunststoffverbund mindestens eine Matrix, ein Harz oder einen Klebstoff auf, der mit dem Faserwerkstoff einen Verbund eingeht. Aufgrund einer vorgebbaren Orientierung der Faserlagen und/oder Fasern kann eine Auslegung gemäß der jeweiligen Steifigkeitsanforderungen realisiert werden. Insbesondere können komplexe Ausgestaltungen eines Stabilisators und/oder Stabilisatorkörpers umgesetzt werden. Gerade im Unterflurbereich eines Kraftfahrzeuges werden besonders hohe Anforderungen an die Möglichkeiten der Bauteilkonfiguration eines Stabilisators gestellt. Beispielsweise wird durch Federbeine, Antriebswellen, Querlenker, Bremsen, Bremsleitungen oder weitere Bauteile nur ein geringer Bauraum für die Anordnung eines Stabilisators zur Verfügung gestellt. Unter Verwendung eines Faserkunststoffverbundes ist es möglich, einen Stabilisator derart, insbesondere gebogen, zu gestalten, dass er den vorhandenen Bauraum optimal ausnutzt und zugleich eine optimale Funktionalität gewährleistet.

Insbesondere ist die Pendelstütze mindestens teilweise oder vollständig aus Kunststoff oder einem Faserkunststoffverbund hergestellt. Die Pendelstütze und/oder der gesamte Stabilisator kann als ein Hybridbauteil aus unterschiedlichen Materialien hergestellt sein. Vorzugsweise ist eine mit dem Anbindungsteil zusammenwirkende Gelenkkugel der Pendelstütze sowie sich ein von der Gelenkkugel aus erstreckender Zapfenabschnitt aus einem Metall gebildet. Vorzugsweise ist lediglich das Verbindungsbauteil der Pendelstütze aus Kunststoff und/oder einem Faserkunststoffverbund realisiert. Demnach kann auch eine mit dem Verbindungsbauteil zusammenwirkende weitere Gelenkkugel sowie sich ein von der weiteren Gelenkkugel erstreckender weiterer Zapfenabschnitt aus Metall hergestellt sein.

Gemäß dem erfindungsgemäßen Verfahren zum Herstellen eines erfindungsgemäßen Stabilisators werden der Stabilisatorkörper und die Pendelstütze bereitgestellt. Somit werden zunächst der Stabilisatorkörper und die Pendelstütze als Einzelbauteil vorgefertigt. Im Rahmen der Vorfertigung kann die Pendelstütze bereits mit dem weiteren Verbindungsbauteil und/oder der weiteren Gelenkverbindung ausgestattet werden. Dem Bereitstellen des Stabilisatorkörpers und der Pendelstütze nachfolgend wird das Anbindungsteil als ein Spritzgussteil hergestellt. Insbesondere wird hierzu mindestens die Pendelstütze oder ein dem Stabilisatorkörperende zugewandtes Pendelstützenende in ein geeignet ausgebildetes Spritzgusswerkzeug eingelegt. Beim Spritzgießen des Anbindungsteils wird dieses zugleich an das Pendelstützenende angespritzt. Hierdurch ist das Pendelstützenende dem ersten Ende des Anbindungsteils zugewandt und/oder an diesem angeordnet.

Erfindungsgemäß wird beim Spritzgießen des Anbindungsteils dieses zugleich an das Stabilisatorkörperende angespritzt. Hierzu können die Pendelstütze und der Stabilisatorkörper gemeinsam in ein Spritzgusswerkzeug eingelegt werden. Es kann ausreichend sein, dass das dem Stabilisatorkörper zugewandte Pendelstützenende sowie das dem Pendelstützenende zugewandte Stabilisatorkörperende in das Spritzgusswerkzeug eingelegt sind. Ein erstes Ende des Anbindungsteils wird an das Pendelstützenende und ein zweites Ende des Anbindungsteils an das Stabilisatorkörperende angespritzt.

Insbesondere handelt es sich bei dem gemäß dem erfindungsgemäßen Verfahren hergestellten Stabilisator um einen zuvor beschriebenen erfindungsgemäßen Stabilisator. Vorzugsweise ist das Verfahren gemäß allen im Zusammenhang mit dem hier beschriebenen erfindungsgemäßen Stabilisator erläuterten Ausgestaltungen weitergebildet. Ferner kann der hier beschriebene Stabilisator gemäß allen im Zusammenhang mit den Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Frontansicht eines erfindungsgemäßen Stabilisators,
- Fig. 2: eine perspektivische Seitenansicht eines Ausschnittes des erfindungsgemäßen Stabilisators gemäß Fig. 1,
- Fig. 3: eine perspektivische Ansicht einer Pendelstütze für den erfindungsmäßen Stabilisator gemäß Fig. 1 oder 2,
- Fig. 4: eine perspektivische Seitenansicht eines Ausschnittes eines Stabilisatorkörperendes und einer Pendelstütze ohne ein Anbindungsteil, und
- Fig. 5: eine perspektivische Ansicht eines Stabilisatorkörperendes ohne Anbindungsteil.

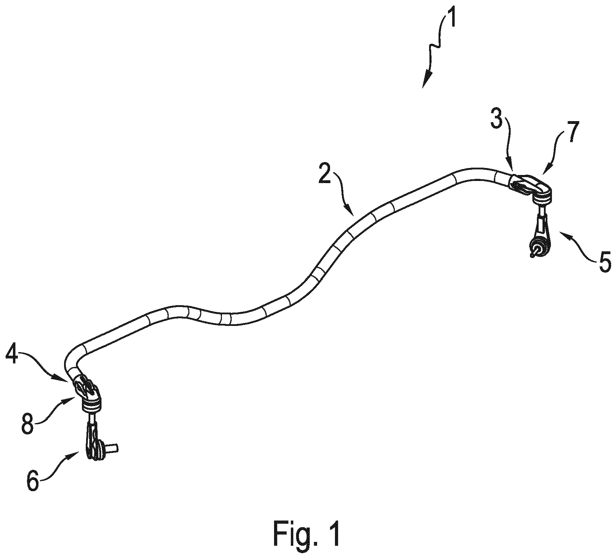

Figur 1 zeigt eine perspektivische Frontansicht eines erfindungsgemäßen Stabilisators 1. Hierbei handelt es sich um eine auf Torsion beanspruchbare Drehstabfedereinrichtung, die zur Vermeidung von Wankbewegungen eines Fahrzeugs am Fahrwerk des Fahrzeugs einsetzbar ist. Der Stabilisator 1 weist einen Stabilisatorkörper 2 auf. Der Stabilisatorkörper 2 ist stangenartig oder stabartig ausgebildet. Des Weiteren ist der Stabilisatorkörper 2 gebogen ausgebildet. Hierbei sind zwei voneinander abgewandte Stabilisatorkörperenden 3, 4 derart angeordnet, dass sich eine im Wesentlichen U-förmige Gestalt des Stabilisatorkörpers 2 ergibt. Somit realisieren die beiden Stabilisatorkörperenden 3, 4 die Schenkel der im Wesentlichen U-förmigen Gestalt des Stabilisatorkörpers 2. Der Stabilisatorkörper 2 ist aus einem faserverstärkten Kunststoff bzw. aus einem Faserkunststoffverbund hergestellt. Als Fasermaterial können beispielsweise endlose Glas- oder Kohlefasern zum Einsatz gelangen, die in eine duroplastische oder thermoplastische Matrix eingebettet sind. Hierbei kann der Stabilisatorkörper 2 hohl- bzw. rohrförmig ausgeführt oder aus Vollmaterial gefertigt sein.

Des Weiteren weist der Stabilisator 1 zwei Pendelstützen 5, 6 auf. Hierbei ist die Pendelstütze 5 dem Stabilisatorkörperende 3 und die Pendelstütze 6 dem Stabilisatorkörperende 4 zugeordnet.

Darüber hinaus weist der Stabilisator 1 zwei Anbindungsteile 7, 8 auf. Hierbei ist das Anbindungsteil 7 dem Stabilisatorkörperende 3 und das Anbindungsteil 8 dem Stabilisatorkörperende 4 zugeordnet. Im Einzelnen sind die Anbindungsteile 7, 8 jeweils zwischen dem Stabilisatorkörperende 3 bzw. 4 und der zugehörigen Pendelstütze 5 bzw. 6 angeordnet. Somit dienen die Anbindungsteile 7, 8 als eine Art Schnittstelle zur Kraftübertragung zwischen dem Stabilisatorkörper 2 und den Pendelstützen 5, 6.

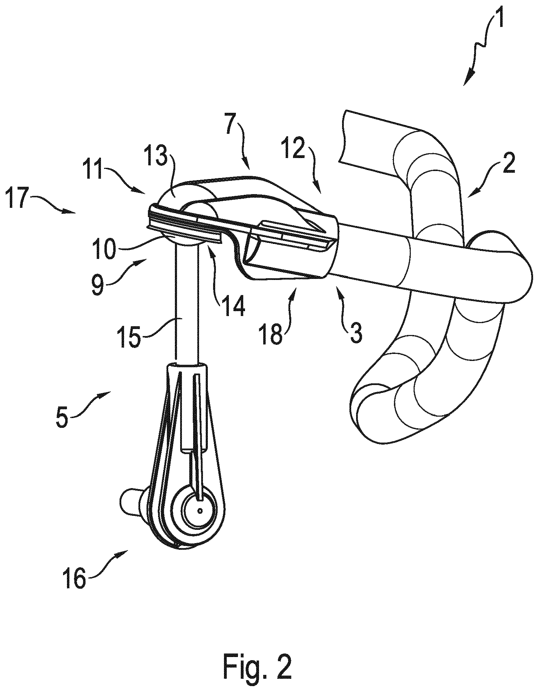

Figur 2 zeigt eine perspektivische Seitenansicht eines Ausschnittes des erfindungsgemäßen Stabilisators 1 gemäß Figur 1. Im Einzelnen ist hier das Stabilisatorkörperende 3 mit der Pendelstütze 5 und dem Anbindungsteil 7 gezeigt. Die nachfolgenden Ausführungen hierzu gelten analog auch für das Stabilisatorkörperende 4, die Pendelstütze 6 und das Anbindungsteil 8.

Das Anbindungsteil 7 ist als ein Spritzgussteil ausgebildet, das an ein erstes Pendelstützenende 9 angespritzt ist. Das erste Pendelstützenende 9 hat eine Gelenkkugel 10. Das erste Pendelstützenende 9 bzw. die Gelenkkugel 10 ist mit einem ersten Ende 11 des Anbindungsteils 7 verbunden.

Von dem ersten Ende 11 des Anbindungsteils 7 abgewandt weist dieses ein zweites Ende 12 auf. Das zweite Ende 12 des Anbindungsteils 7 ist mit dem Stabilisatorkörperende 3 verbunden. Bei diesem Ausführungsbeispiel ist das zweite Ende 12 des Anbindungsteils 7 an das Stabilisatorkörperende 3 angespritzt. Alternativ kann das zweite Ende 12 mittels eines Formschlusses, insbesondere einer Schnappverbindung, mit dem Stabilisatorkörperende 3 verbunden sein.

Das erste Ende 11 des Anbindungsteils 7 weist einen Gelenkgehäuseabschnitt 13 auf. Der Gelenkgehäuseabschnitt 13 hat eine Gehäuseausnehmung 14, in der die Gelenkkugel 10 beweglich gelagert ist. Ausgehend von der Gelenkkugel 10 erstreckt sich ein Zapfenabschnitt 15 der Pendelstütze 5 aus dem Gelenkgehäuseabschnitt 13 bzw. der Gehäuseausnehmung 14 in Richtung eines von dem ersten Pendelstützenende 9 abgewandten zweiten Pendelstützenendes 16. Somit ist die Verbindung des ersten Pendelstützenendes 9 mit dem Anbindungsteil 7 als eine Gelenkverbindung 17 realisiert. Bei diesem Ausführungsbeispiel ist die Gelenkverbindung 17 als eine Kugelgelenkverbindung ausgebildet.

Das zweite Ende 12 des Anbindungsteils 7 weist einen Aufnahmeabschnitt 18 auf. Der Aufnahmeabschnitt 18 umschließt das Stabilisatorkörperende 3 bzw. das Stabilisatorkörperende 3 ist mindestens teilweise in dem Aufnahmeabschnitt 18 aufgenommen.

Der Stabilisator 1 ist bei diesem Ausführungsbeispiel als ein Bauteilverbund, bestehend aus dem Stabilisatorkörper 2, den Pendelstützen 5, 6 und den Anbindungsteilen 7, 8, gebildet. Da die Anbindungsteile 7, 8 mit ihrem jeweiligen ersten Ende 11 an das erste Pendelstützenende 9 und mit dem jeweiligen zweiten Ende 12 an das Stabilisatorkörperende 3 bzw. 4 angespritzt sind, stellt der Bauteilverbund eine nicht-zerstörungsfrei trennbare Einheit dar.

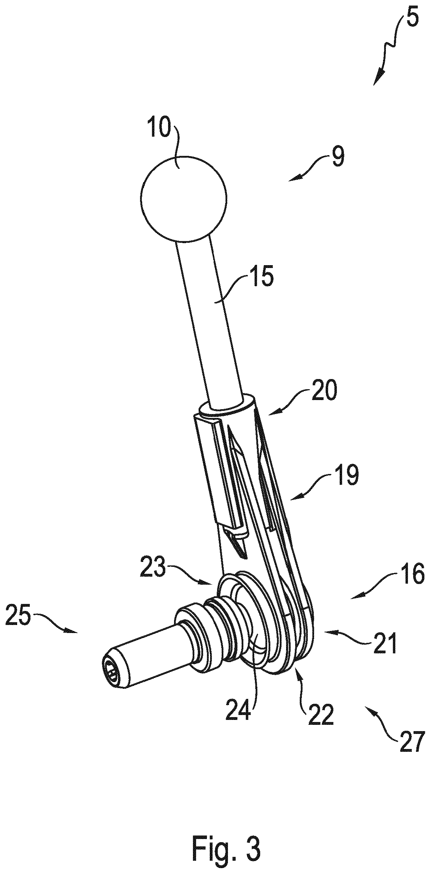

Figur 3 zeigt eine perspektivische Ansicht der Pendelstütze 5 für den erfindungsgemäßen Stabilisator 1 gemäß Figuren 1 oder 2. Die folgenden Ausführungen hierzu gelten analog auch für die Pendelstütze 6.

Die Pendelstütze 5 weist an dem zweiten Pendelstützenende 16 ein Verbindungsbauteil 19 auf. Bei diesem Ausführungsbeispiel ist das Verbindungsbauteil 19 als ein Spritzgussteil an das zweite Pendelstützenende 16 angespritzt. Hierbei ist das Verbindungsbauteil aus einem Kunststoff oder Faserkunststoffverbund hergestellt. Das Verbindungsbauteil 19 weist ein erstes Ende 20 und ein hiervon abgewandtes zweites Ende 21 auf. Das erste Ende 20 des Verbindungsbauteils 19 ist fest bzw. drehfest mit einem von der Gelenkkugel 10 abgewandten Ende des Zapfenabschnitts 15 verbunden.

Das zweite Ende 21 des Verbindungsbauteils 19 weist einen weiteren Gelenkgehäuseabschnitt 22 auf. Der weitere Gelenkgehäuseabschnitt 22 hat eine weitere Gehäuseausnehmung 23. In der weiteren Gehäuseausnehmung 23 ist eine weitere Gelenckugel 24 eines Kugelzapfens 25 beweglich gelagert. Ausgehend von der weiteren Gelenkkugel 24 erstreckt sich ein weiterer Zapfenabschnitt 26 aus dem weiteren Gelenkgehäuseabschnitt 22 bzw. der weiteren Gehäuseausnehmung 23 heraus.

Somit ist im Bereich des zweiten Pendelstützenendes 16 eine weitere Gelenkverbindung 27 realisiert. Bei diesem Ausführungsbeispiel ist die weitere Gelenkverbindung 27 als eine Kugelgelenkverbindung ausgebildet. Der weitere Zapfenabschnitt 26 ist mit einem Fahrwerkbauteil, beispielsweise mit einem Radträger oder einem Lenker, verbindbar.

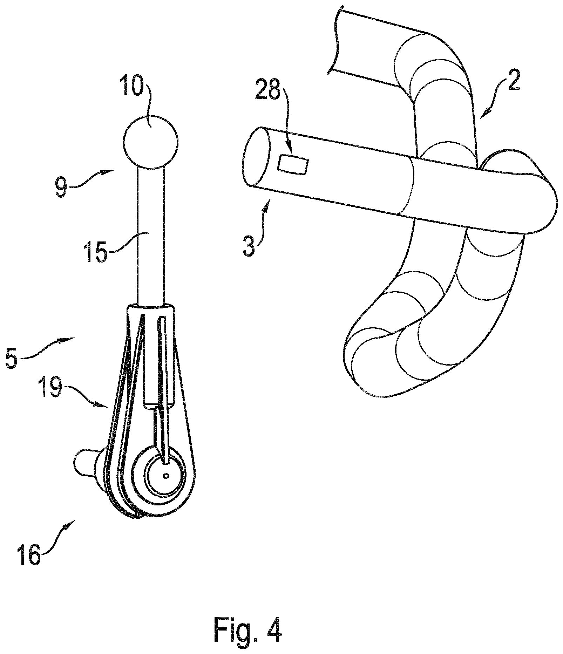

Figur 4 zeigt eine perspektivische Seitenansicht eines Ausschnittes des Stabilisatorkörperendes 3 und der Pendelstütze 5 ohne das Anbindungsteil 7. Die anschließenden Ausführungen gelten analog für das Stabilisatorkörperende 4, die Pendelstütze 6 und das Anbindungsteil 8.

Das Stabilisatorkörperende 3 weist eine Verdrehsicherung 28 auf. Die Verdrehsicherung 28 dient zum Herstellen einer drehfesten bzw. rotationsfesten Verbindung des zweiten Endes 12 des Anbindungsteils 7 mit dem Stabilisatorkörperende 3 gemäß Figur 2.

Eine entsprechende Verdrehsicherung 28 kann als eine Hinterschneidung und/oder Abflachung in der Außenfläche oder Umfangsfläche des Stabilisatorkörperendes 3 ausgebildet sein.

Entsprechend der Verdrehsicherung 28 kann eine hier nicht näher dargestellte weitere Verdrehsicherung im Bereich des von der Gelenkkugel 10 abgewandten Endes des Zapfenabschnittes 15 der Pendelstütze 9 angeordnet sein. Hierbei dient die weitere Verdrehsicherung einer drehfesten und/oder rotationsfesten Verbindung des Verbindungsbauteils 19 mit dem Zapfenabschnitt 15.

Zum Herstellen einer Verbindung zwischen der Pendelstütze 5 und dem Stabilisatorkörperende 3 des Stabilisatorkörpers 2 werden mindestens das erste Pendelstützenende 9 mit der Gelenkkugel 10 und das Stabilisatorkörperende 3 in einem geeigneten Spritzgusswerkzeug eingelegt. Hierbei ist das erste Pendelstützenende 9 dem Stabilisatorkörperende 3 zugewandt und mit einem vorgegebenen Abstand zwischen dem ersten Pendelstützenende 9 und dem Stabilisatorkörperende 3 angeordnet. Anschließend erfolgt das Herstellen des Anbindungsteils 7. Gemäß diesem Ausführungsbeispiel wird hierbei das Anbindungsteil 7 gleichzeitig mit seinem ersten Ende 11 an das erste Pendelstützenende 9 und mit seinem zweiten Ende 12 an das Stabilisatorkörperende 3 angespritzt. Somit kann das Herstellen einer Verbindung zwischen der Pendelstütze 5 und dem Stabilisatorkörper 2 in einem einzigen Arbeitsschritt erfolgen. Bei diesem Ausführungsbeispiel wird das Anbindungsteil 7 aus einem Kunststoff oder Faserkunststoffverbund hergestellt.

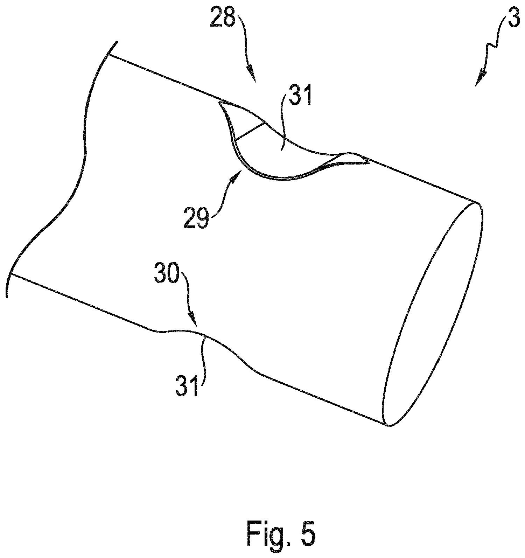

Figur 5 zeigt eine perspektivische Ansicht eines Stabilisatorkörperendes 3 ohne Anbindungsteil 7. Die nachfolgenden Ausführungen gelten analog auch für das Stabilisatorkörperende 4.

Die Verdrehsicherung 28 ist bei diesem Ausführungsbeispiel mittels beidseitig in das Stabilisatorkörperende 3 angeordneten Vertiefungen 29, 30 ausgebildet. Hierbei sind die Vertiefungen 29, 30 in die Außenumfangsfläche des Stabilisatorkörperendes 3 eingebracht. Die Vertiefungen 29, 30 sind auf voneinander abgewandten Seiten des Stabilisatorkörperendes 3 angeordnet. Somit sind die Vertiefungen 29, 30 voneinander abgewandt ausgerichtet. Abgesehen von der Ausrichtung sind die Vertiefungen 29, 30 identisch ausgebildet.

Die Vertiefung 29 bzw. 30 weist eine wannenartige Senke 31 auf. Beim Umspritzen des Stabilisatorkörperendes 3 zum Bilden des Anbindungsteils 7 wird zugleich die Verdrehsicherung 28 umspritzt. Hierbei dringt das Material zum Ausbilden des Anbindungsteils 7 in die Verdrehsicherung, die Vertiefungen 29, 30 bzw. in die Senke 31 ein. Hierdurch ist nach dem Aushärten des Materials zum Ausbilden des Anbindungsteils 7 eine Relativbewegung des Anbindungsteils 7 in Bezug zu dem Stabilisatorkörperende 3 verhindert.

### Bezugszeichen

- 1: Stabilisator
- 2: Stabilisatorkörper
- 3: Stabilisatorkörperende
- 4: Stabilisatorkörperende
- 5: Pendelstütze
- 6: Pendelstütze
- 7: Anbindungsteil
- 8: Anbindungsteil
- 9: erstes Pendelstützenende
- 10: Gelenkkugel
- 11: erstes Ende des Anbindungsteils
- 12: zweites Ende des Anbindungsteils
- 13: Gelenkgehäuseabschnitt
- 14: Gehäuseausnehmung
- 15: Zapfenabschnitt
- 16: zweites Pendelstützenende
- 17: Gelenkverbindung
- 18: Aufnahmeabschnitt
- 19: Verbindungsbauteil
- 20: erstes Ende des Verbindungsbauteils
- 21: zweites Ende des Verbindungsbauteils
- 22: weiterer Gelenkgehäuseabschnitt
- 23: weitere Gehäuseausnehmung
- 24: weitere Gelenkkugel
- 25: Kugelzapfen
- 26: weiterer Zapfenabschnitt
- 27: weitere Gelenkverbindung
- 28: Verdrehsicherung
- 29: Vertiefung
- 30: Vertiefung
- 31: Senke

## Patentansprüche

1. Stabilisator für ein Fahrwerk eines Fahrzeugs mit einem gebogenen, eine Torsionsfeder ausbildenden Stabilisatorkörper (2), mit einer Pendelstütze (5, 6) und mit einem Anbindungsteil (7, 8), wobei das Anbindungsteil (7, 8) den Stabilisatorkörper (2) und die Pendelstütze (5, 6) miteinander verbindet, **dadurch gekennzeichnet, dass** ein erstes Ende (11) des Anbindungsteils (7, 8) an ein Pendelstützenende (9) und ein zweites Ende (12) des Anbindungsteils (7, 8) an ein Stabilisatorkörperende (3, 4) angespritzt sind.

2. Stabilisator nach Anspruch 1, **dadurch gekennzeichnet, dass** zwischen dem ersten Ende (11) des Anbindungsteils (7, 8) und dem Pendelstützenende (9) eine Gelenkverbindung (17) realisiert ist, insbesondere ist die Gelenkverbindung (17) als eine Kugelgelenkverbindung und/oder eine Drehgelenkachsverbindung realisiert.

3. Stabilisator nach Anspruch 1 oder 2, **dadurch gekennzeichnet, dass** das Pendelstützenende (9) eine Gelenkkugel (10) aufweist, die mittels des ersten Ende (11) des Anbindungsteils (7, 8) umspritzt ist, insbesondere ist die Gelenkkugel (10) gelenkig in dem ersten Ende (11) des Anbindungsteils (7, 8) gelagert.

4. Stabilisator nach einem der vorhergehenden Ansprüche, **dadurch gekennzeichnet, dass** zwischen einem zweiten Ende (12) des Anbindungsteils (7, 8) und einem Stabilisatorkörperende (3, 4) eine ungelenkige oder starre Verbindung realisiert ist.

5. Stabilisator nach einem der vorhergehenden Ansprüche, **dadurch gekennzeichnet, dass** ein zweites Ende (12) des Anbindungsteils (7, 8) mittels einer stoffschlüssigen Verbindung und/oder einer formschlüssigen Verbindung, insbesondere einer Klebeverbindung und/oder einer Schnappverbindung, mit einem Stabilisatorkörperende (3, 4) verbunden ist.

6. Stabilisator nach einem der vorhergehenden Ansprüche, **gekennzeichnet durch** eine Ausbildung als ein nicht-zerstörungsfrei trennbarer Bauteilverbund, insbesondere ist der Bauteilverbund mittels des Anbindungsteils (7, 8) und der Pendelstütze (5, 6) und/oder dem Stabilisatorkörper (2) realisiert.

7. Stabilisator nach einem der vorhergehenden Ansprüche, **dadurch gekennzeichnet, dass** der Stabilisatorkörper (2) zwei voneinander abgewandte Stabilisatorkörperenden (3, 4) aufweist, die jeweils mittels eines Anbindungsteils (7, 8) mit einer Pendelstütze (5, 6) verbunden sind.

8. Stabilisator nach einem der vorhergehenden Ansprüche, **dadurch gekennzeichnet**, ein Stabilisatorkörperende (3, 4) eine mit dem Anbindungsteil (7, 8) zusammenwirkende Verdrehsicherung (28) aufweist, insbesondere ist die Verdrehsicherung (28) als eine Hinterschneidung, Abflachung und/oder Ovalität ausgebildet.

9. Stabilisator nach einem der vorhergehenden Ansprüche, **dadurch gekennzeichnet, dass** das Anbindungsteil (7, 8) an ein erstes Pendelstützenende (9) der Pendelstütze (5, 6) angespritzt ist und an ein von dem ersten Pendelstützenende (9) abgewandtes zweites Pendelstützenende (16) ein Verbindungsbauteil (19) angespritzt ist, insbesondere weist das Verbindungsbauteil (19) eine weitere Gelenkverbindung (27) auf.

10. Stabilisator nach einem der vorhergehenden Ansprüche, **dadurch gekennzeichnet, dass** der Stabilisatorkörper (2) und/oder das Anbindungsteil (7, 8) aus Kunststoff oder einem Faserkunststoffverbund hergestellt sind, insbesondere ist die Pendelstütze (5, 6) mindestens teilweise aus Kunststoff oder einem Faserkunststoffverbund hergestellt.

11. Verfahren zum Herstellen eines Stabilisators (1) nach einem der vorhergehenden Ansprüche, bei dem der Stabilisatorkörper (2) und die Pendelstütze (5, 6) bereitgestellt werden, bei dem das Anbindungsteil (7, 8) als ein Spritzgussteil hergestellt wird, und beim Spritzgießen des Anbindungsteils (7, 8) dieses zugleich an ein Pendelstützenende (9) und an ein Stabilisatorkörperende (3, 4) angespritzt wird, wobei ein erstes Ende (11) des Anbindungsteils (7, 8) an das Pendelstützenende (9) und ein zweites Ende (12) des Anbindungsteils (7, 8) an das Stabilisatorkörperende (3, 4) angespritzt wird.

## Claims

1. Anti-roll bar for a chassis of a vehicle with a bent anti-roll bar body (2) which configures a torsion spring, with a hinged support (5, 6) and with an attachment part (7, 8), the attachment part (7, 8) connecting the anti-roll bar body (2) and the hinged support (5, 6) to one another, **characterized in that** a first end (11) of the attachment part (7, 8) is moulded onto one hinged support end (9) and a second end (12) of the attachment part (7, 8) is moulded onto an anti-roll bar body end (3, 4).

2. Anti-roll bar according to Claim 1, **characterized in that** an articulated connection (17) is realized between the first end (11) of the attachment part (7, 8) and the hinged support end (9), and, in particular, the articulated connection (17) is realized as a ball joint connection and/or a steering knuckle axle connection.

3. Anti-roll bar according to Claim 1 or 2, **characterized in that** the hinged support end (9) has a joint ball (10) which is overmoulded by means of the first end (11) of the attachment part (7, 8), and, in particular, the joint ball (10) is mounted in an articulated manner in the first end (11) of the attachment part (7, 8).

4. Anti-roll bar according to one of the preceding claims, **characterized in that** a non-articulated or rigid connection is realized between a second end (12) of the attachment part (7, 8) and an anti-roll bar end (3, 4).

5. Anti-roll bar according to one of the preceding claims, **characterized in that** a second end (12) of the attachment part (7, 8) is connected to an anti-roll bar body end (3, 4) by means of an integrally joined connection and/or a positively locking connection, in particular an adhesive bond and/or a snap-action connection.

6. Anti-roll bar according to one of the preceding claims, **characterized by** a configuration as a component combination which cannot be dismantled without destruction, and, in particular, the component combination is realized by means of the attachment part (7, 8) and the hinged support (5, 6) and/or the anti-roll bar body (2).

7. Anti-roll bar according to one of the preceding claims, **characterized in that** the anti-roll bar body (2) has two anti-roll bar body ends (3, 4) which face away from one another and are connected to a hinged support (5, 6) in each case by means of an attachment part (7, 8) .

8. Anti-roll bar according to one of the preceding claims, **characterized in that** an anti-roll bar body end (3, 4) has an anti-rotation safeguard (28) which interacts with the attachment part (7, 8), and, in particular, the anti-rotation safeguard (28) is configured as an undercut, flattened portion and/or ovality.

9. Anti-roll bar according to one of the preceding claims, **characterized in that** the attachment part (7, 8) is moulded onto a first hinged support end (9) of the hinged support (5, 6), and a connecting component (19) is moulded onto a second hinged support end (16) which faces away from the first hinged support end (9), and, in particular, the connecting component (19) has a further articulated connection (27).

10. Anti-roll bar according to one of the preceding claims, **characterized in that** the anti-roll bar body (2) and/or the attachment part (7, 8) are/is produced from plastic or a fibre-reinforced plastic composite, and, in particular, the hinged support (5, 6) is produced at least partially from plastic or a fibre-reinforced plastic composite.

11. Method for producing an anti-roll bar (1) according to one of the preceding claims, in the case of which method the anti-roll bar body (2) and the hinged support (5, 6) are provided, in the case of which method the attachment part (7, 8) is produced as an injection-moulded part, and, in the case of the injection moulding of the attachment part (7, 8), the latter is at the same time moulded onto a hinged support end (9) and onto an anti-roll bar body end (3, 4), a first end (11) of the attachment part (7, 8) being moulded onto the hinged support end (9), and a second end (12) of the attachment part (7, 8) being moulded onto the anti-roll bar body end (3, 4) .

## Revendications

1. Stabilisateur pour un châssis d'un véhicule, comprenant un corps de stabilisateur (2) courbe, réalisant une barre de torsion, un support oscillant (5, 6) et une pièce de raccordement (7, 8), la pièce de raccordement (7, 8) reliant l'un à l'autre le corps de stabilisateur (2) et le support oscillant (5, 6), **caractérisé en ce qu'**une première extrémité (11) de la pièce de raccordement (7, 8) est surmoulée sur une extrémité de support oscillant (9), et une deuxième extrémité (12) de la pièce de raccordement (7, 8) est surmoulée sur une extrémité de corps de stabilisateur (3, 4) .

2. Stabilisateur selon la revendication 1, **caractérisé en ce qu'**un assemblage articulé (17) est réalisé entre la première extrémité (11) de la pièce de raccordement (7, 8) et l'extrémité de support oscillant (9), l'assemblage articulé (17) étant réalisé en particulier sous la forme d'un assemblage à rotule et/ou d'un assemblage à axe de pivotement.

3. Stabilisateur selon la revendication 1 ou 2, **caractérisé en ce que** l'extrémité de support oscillant (9) présente une rotule d'articulation (10) qui est surmoulée au moyen de la première extrémité (11) de la pièce de raccordement (7, 8), la rotule d'articulation (10) étant en particulier logée de manière articulée dans la première extrémité (11) de la pièce de raccordement (7, 8) .

4. Stabilisateur selon l'une quelconque des revendications précédentes, **caractérisé en ce qu'**un assemblage non articulé ou rigide est réalisé entre une deuxième extrémité (12) de la pièce de raccordement (7, 8) et une extrémité de corps de stabilisateur (3, 4).

5. Stabilisateur selon l'une quelconque des revendications précédentes, **caractérisé en ce qu'**une deuxième extrémité (12) de la pièce de raccordement (7, 8) est reliée à une extrémité de corps de stabilisateur (3, 4) au moyen d'un assemblage par liaison de matière et/ou d'un assemblage par complémentarité de forme, en particulier d'un assemblage collé et/ou d'un assemblage à encliquetage.

6. Stabilisateur selon l'une quelconque des revendications précédentes, **caractérisé par** une réalisation sous la forme d'un ensemble de composants ne pouvant pas être séparé sans destruction, l'ensemble de composants étant en particulier réalisé au moyen de la pièce de raccordement (7, 8) et du support oscillant (5, 6) et/ou du corps de stabilisateur (2).

7. Stabilisateur selon l'une quelconque des revendications précédentes, **caractérisé en ce que** le corps de stabilisateur (2) présente deux extrémités de corps de stabilisateur (3, 4) détournées l'une de l'autre et qui sont reliées à un support oscillant (5, 6) respectivement au moyen d'une pièce de raccordement (7, 8) .

8. Stabilisateur selon l'une quelconque des revendications précédentes, **caractérisé en ce qu'**une extrémité de corps de stabilisateur (3, 4) présente un dispositif anti-rotation (28) coopérant avec la pièce de raccordement (7, 8), le dispositif anti-rotation (28) étant en particulier une contre-dépouille, un méplat et/ou une ovalisation.

9. Stabilisateur selon l'une quelconque des revendications précédentes, **caractérisé en ce que** la pièce de raccordement (7, 8) est surmoulée sur une première extrémité de support oscillant (9) du support oscillant (5, 6), et un composant de liaison (19) est surmoulé sur une deuxième extrémité de support oscillant (16) détournée de la première extrémité de support oscillant (9), le composant de liaison (19) présentant en particulier un autre assemblage articulé (27).

10. Stabilisateur selon l'une quelconque des revendications précédentes, **caractérisé en ce que** le corps de stabilisateur (2) et/ou la pièce de raccordement (7, 8) sont fabriqués en matière plastique ou en matière plastique renforcée par des fibres, le support oscillant (5, 6) étant en particulier au moins partiellement fabriqué en matière plastique ou en matière plastique renforcée par des fibres.

11. Procédé de fabrication d'un stabilisateur (1) selon l'une quelconque des revendications précédentes, dans lequel le corps de stabilisateur (2) et le support oscillant (5, 6) sont fournis, la pièce de raccordement (7, 8) étant fabriquée sous forme de pièce moulée par injection, et lors du moulage par injection de la pièce de raccordement (7, 8), celle-ci est surmoulée en même temps sur une extrémité de support oscillant (9) et sur une extrémité de corps de stabilisateur (3, 4), une première extrémité (11) de la pièce de raccordement (7, 8) étant surmoulée sur l'extrémité de support oscillant (9) et une deuxième extrémité (12) de la pièce de raccordement (7, 8) étant surmoulée sur l'extrémité de corps de stabilisateur (3, 4).
